# EUROPEAN PATENT SPECIFICATION

(11) **EP 3 593 947 B1**
(45) Date of publication and mention of the grant of the patent: **07.04.2021**
(21) Application number: 19184280.6
(22) Date of filing: 03.07.2019
(51) Int. Cl.: B25B 27/14, B25B 27/00

(54) **PISTON REMOVAL TOOL**
KOLBENAUSBAUWERKZEUG
OUTIL DE RETRAIT DE PISTON

(30) Priority: 09.07.2018 GB 201811217
(43) Date of publication of application: 15.01.2020
(73) Proprietor: Caterpillar Energy Solutions GmbH, 68167 Mannheim (DE)
(72) Inventor: GUISASOLA, Inigo, 76829 Landau (DE)
(74) Representative: BRP Renaud & Partner mbB Rechtsanwälte Patentanwälte Steuerberater

(56) References cited:
- CN-U- 203 510 091
- JP-A- S58 181 584
- JP-U- S5 375 608
- JP-U- S6 074 967
- JP-U- S57 186 641
- US-B2- 6 601 279

## Description

### Technical Field

The present disclosure relates to a piston removal tool, as per the preamble of claim 1, and to a method for removing a piston as per the preamble of claim 10. Such a tool and such a method are known from the document JP S60 74967 U.

### Background

Typically, a piston associated with an engine may have to be removed from a cylinder in which it is received for replacement or servicing purposes. In order to remove the piston from the cylinder, an extraction tool is inserted within a piston bowl of the piston. A portion of the extraction tool may be threadably received within a groove provided in the piston. The groove communicates with an inner surface of the piston bowl. The groove tends to increase a space for unburned fuel. Further, the extraction tools that are currently available press against the inner surfaces of the piston. In some cases, large forces applied by such tools may damage the piston, which is not desirable.

U.S. Patent Number 6,601,279 describes a piston pulling apparatus constructed like a mandrel. The piston pulling apparatus also includes top and bottom ends and a cylindric periphery body defined by an array of piston bowl gripping segments having tops and bottoms and lying longitudinally between the top and bottom ends. The top end and the proximate tops of segments are held to each other with a fixed radius and circumference. The bottom end and its proximate array of bottoms are coupled to enable the radial expansion of the array from its bottoms. A threaded shaft lies axially within the body and is coupled to the bottom end to move it vertically upward axially, to displace the segment array bottoms radially, to increase the effective circumference of this apparatus near its bottom end; which, during the expansion, can be positioned to grip the inner sides of a piston bowl.

### Summary of the Disclosure

In one aspect of the present disclosure, a tool for removing a piston from a cylinder of an engine is provided. The tool includes a first member having a slot defined on an outer surface thereof. The tool also includes a first handle connected to the first member. The tool further includes at least one arm member pivotally coupled with the first member. The at least one arm member includes a first portion that contacts an inner surface of the piston when the piston is being removed from the cylinder. The tool includes a second member disposed around the first member and movable between a first position and a second position. The second member is adapted to limit an axial movement of the at least one arm member. The tool also includes a second handle connected to the second member to move the second member between the first position and the second position. The at least one arm member includes a third portion that is received within an opening defined in the second member.

In another aspect of the present disclosure, a method for removing a piston from a cylinder of an engine is provided. The method includes positioning a piston removal tool within a piston bowl of the piston. The method also includes moving a second member of the piston removal tool from a first position to a second position by sliding the second member with respect to a first member of the piston removal tool. The second member is disposed around the first member. Further, the at least one arm member of the piston removal tool pivots relative to the first member based on the movement of the second member from the first position to the second position. The method further includes locking a first portion of the at least one arm member with an inner surface of the piston based on the pivoting of the at least one arm member relative to the first member. The method includes removing the piston from the cylinder by pulling a first handle connected to the first member. The method further includes receiving a third portion of the at least one arm member within an opening of the second member.

Other features and aspects of this disclosure will be apparent from the following description and the accompanying drawings.

### Brief Description of the Drawings

FIG. 1 is a schematic view of an exemplary engine having a piston and a cylinder, according to one embodiment of the present disclosure;
FIG. 2 is a cross-sectional view of a piston removal tool illustrating a second member of the piston removal tool at a first position, according to one embodiment of the present disclosure;
FIG. 3 is a top view of the piston removal tool of FIG. 2 illustrating the second member of the piston removal tool at the first position;
FIG. 4 is a side view of a first member of the piston removal tool of FIG. 2;
FIG. 5 is a top view of an arm member of the piston removal tool of FIG. 2;
FIG. 6 is a cross-sectional view of the piston removal tool illustrating the second member at a second position; and
FIG. 7 is a flowchart for a method of removing the piston from the cylinder.

### Detailed Description

Wherever possible, the same reference numbers will be used throughout the drawings to refer to the same or the like parts. Also, corresponding or similar reference numbers will be used throughout the drawings to refer to the same or corresponding parts.

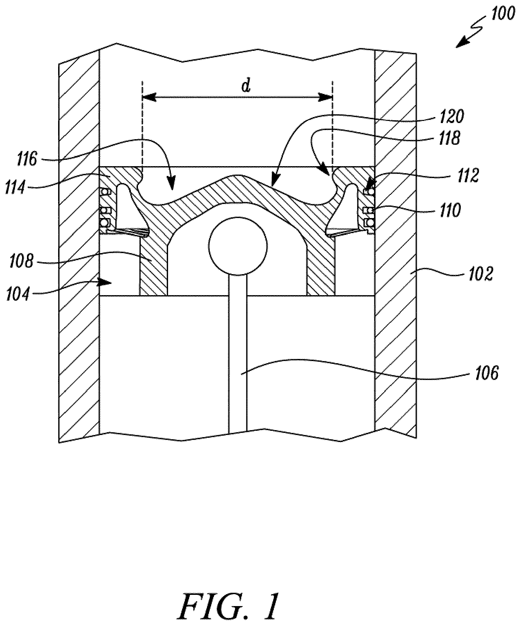

FIG. 1 is a schematic view of a portion of an exemplary engine 100, in accordance with embodiments of the present disclosure. The engine 100 disclosed herein may be a spark-ignited (SI) engine or a compression-ignited (CI) engine. Moreover, the engine 102 may embody a multi-cylinder engine. However, persons skilled in the art will appreciate that the present disclosure is similarly applicable in the case of a single cylinder engine. It should be recognized that the concepts of the present disclosure may be suitably applicable to any type and configuration of the engine 100. In one embodiment, the engine 100 may be employed by a machine (not shown). The engine 100 and/or the machine may be used for applications including, but not limited to, power generation, transportation, construction, agriculture, forestry, aviation, marine, material handling, and waste management.

The engine 100 includes one or more cylinders provided therein. For explanatory purposes, the accompanying figure illustrates a single cylinder 102. The cylinders of the engine 100 may be arranged in any configuration such as inline, radial, "V", and so on. The engine 100 further includes a piston 104 movably disposed within the cylinder 102. The piston 104 is coupled to a crankshaft (not shown) of the engine 100 by a connecting rod 106. Energy generated from combustion of fuel inside a combustion chamber defined in the engine 100 may be converted to rotational energy of the crankshaft by the piston 104.

The piston 104 described herein is a squish type piston. The piston 104 includes a piston skirt 108 that is embodied as a cylindrical part of the piston 104. The piston skirt 108 is coaxial with the cylinder 102. One or more piston rings 110 are provided between the piston 104 and the cylinder 102 in order to seal the combustion chamber. The piston rings 110 are disposed within grooves 112 provided around the piston skirt 108. Further, the piston 104 also includes a piston crown 114. The piston crown 114 is subjected to combustion during operation of the engine 100.

The piston crown 114 defines a piston bowl 116. In embodiments, the piston bowl 116 may itself form the combustion chamber of the engine 100. A shape of the piston bowl 116 controls a movement of air and fuel as the piston 104 moves up for compression stroke. The air and fuel swirl into a vortex inside the piston bowl 116 before combustion or compression takes place, thereby creating a better mixture. It should be noted that the shape and the size of the piston bowl 116 shown herein is exemplary and the shape and the size of the piston bowl 116 may vary, without any limitations. As shown in the accompanying figure, the piston bowl 116 defines a diameter "d" at an upper portion 118 of the piston bowl 116. The diameter "d" can also be defined as an inner bowl diameter of the piston bowl 116.

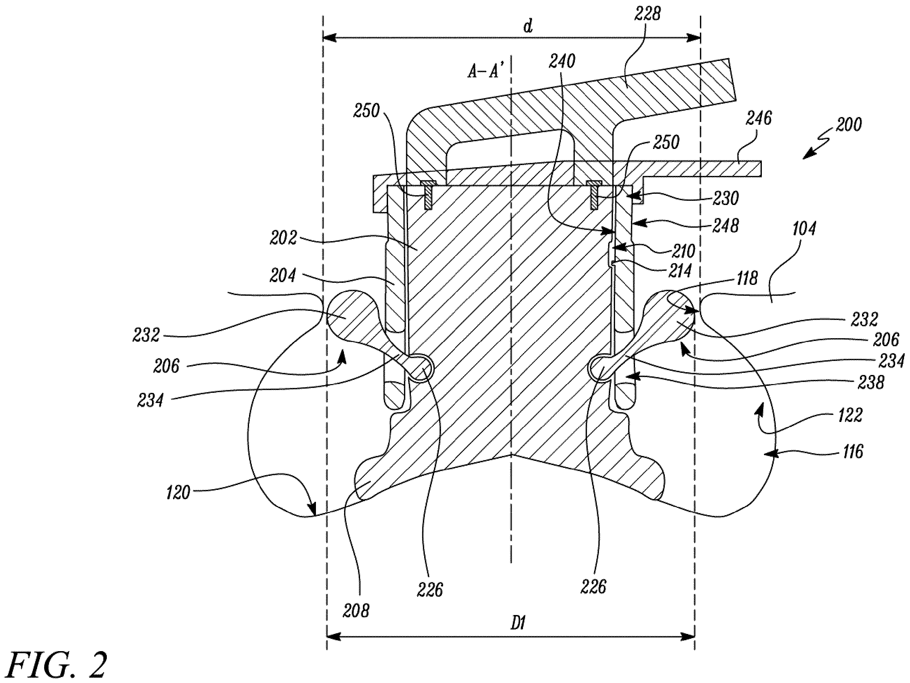

As the piston 104 is a reciprocating part, the piston 104 is generally subjected to wear and tear during engine operation. Accordingly, the piston 104 may have to be removed from the cylinder 102 for servicing or replacement purposes. Referring to FIG. 2, the present disclosure relates to a piston removal tool 200, hereinafter referred to as "tool 200". The tool 200 is used to remove the piston 104 from the cylinder 102. The tool 200 is inserted and positioned within the piston bowl 116 when the piston 104 needs to be removed from the cylinder 102.

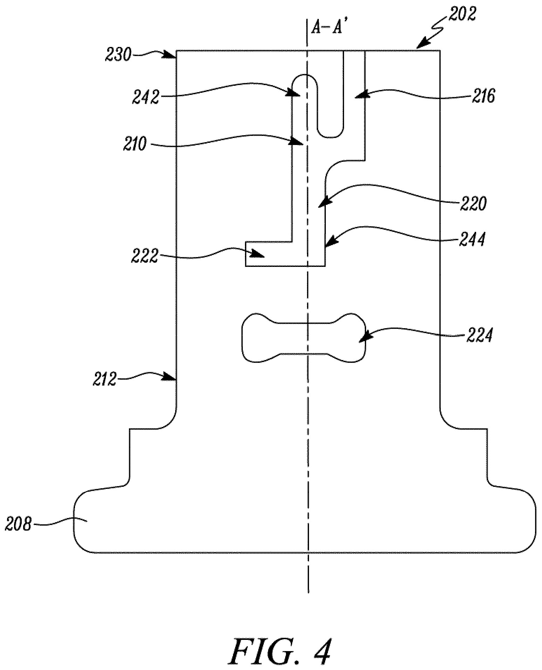

The tool 200 includes a first member 202, a second member 204 disposed around the first member 202, and a number of arm members 206. The first and second members 202, 204 are cylindrical in shape. The first member 202 of the tool 200 will now be explained in detail with reference to FIG. 4. The first member 202 defines a first axis A-A'. Further, the first member 202 includes a base 208 that rests on a lower surface 120 of the piston bowl 116 when the tool 200 is positioned within the piston bowl 116. The base 208 includes a stepped design.

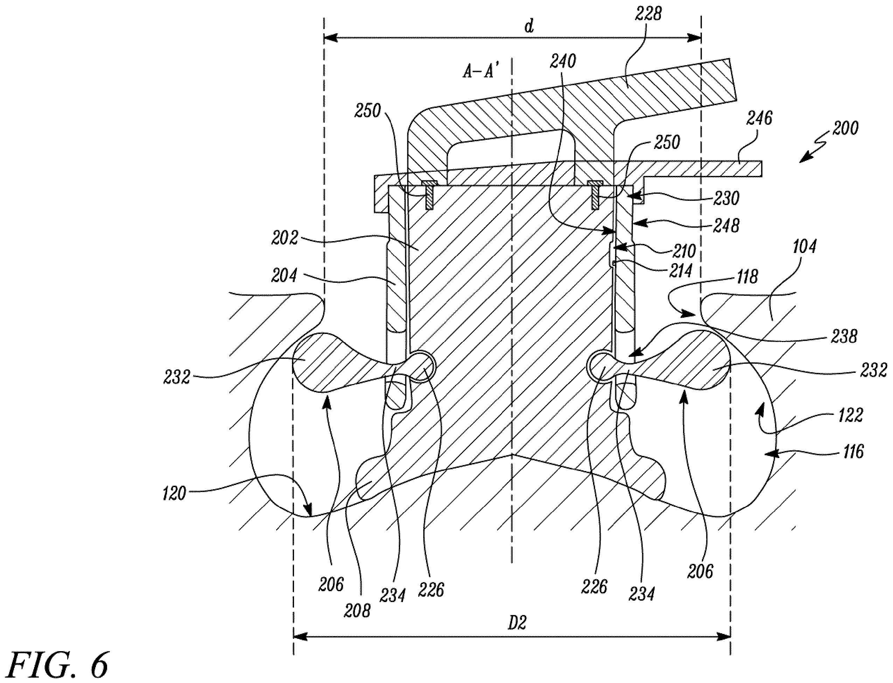

The first member 202 defines a slot 210 on an outer surface 212 of the first member 202. The slot 210 slidably receives a projection 214 defined on an interior surface 240 of the second member 204. The slot 210 defines a passage 216 that communicates with an upper surface (not shown) of the first member 202. Further, the slot 210 defines a first region 220 and a second region 222. The first and second regions 220, 222 are perpendicular to each other. The first region 220 extends parallel to the first axis A-A' and the second region 222 extends perpendicular to the first axis A-A'. The first region 220 receives the projection 214 of the second member 204 when the second member 204 is at a first position. The second member 204 is shown in the first position in FIG. 2. Further, the second region 222 receives the projection 214 of the second member 204 when the second member 204 is at a second position. The second member 204 is shown in the second position in FIG. 6.

The first member 202 also includes a number of grooves 224. The grooves 224 are defined on the outer surface 212 of the first member 202. The grooves 224 extend perpendicular to the first axis A-A'. The grooves 224 receive a second portion 226 of the respective arm members 206 for pivotally coupling the arm members 206 with the first member 202. A shape and a size of the grooves 224 correspond to a shape and a size of the second portion 226 of the arm members 206. It should be noted that a total number of grooves 224 depends on the number of arm members 206 associated with the tool 200. For example, if the tool 200 includes two arm members 206 then the first member 202 includes two grooves 224.

As shown in FIG. 2, the tool 200 includes a first handle 228. The first handle 228 is connected to the first member 202 such that when the tool 200 locks with the piston 104, the first handle 228 can be held by a personnel to remove the piston 104 from the cylinder 102. In one example, the first handle 228 is connected to an upper end 230 of the first member 202. The first handle 228 may be connected to the first member 202 using a mechanical fastener 250, such as a bolt. Alternatively, the first handle 228 may be threadably coupled with the first member 202. It should be noted that the connection techniques described above are exemplary in nature, and the first handle 228 may be connected to the first member 202 using any other technique, without any limitations. Further, a shape of the first handle 228 illustrated in the accompanying figures is exemplary in nature, and the shape of the first handle 228 may vary, without any limitations.

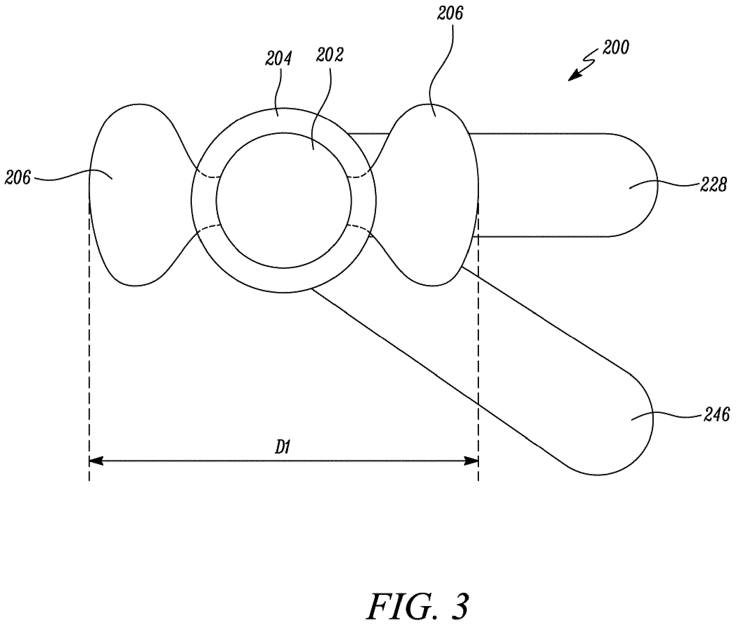

The arm members 206 of the tool 200 will now be explained with reference to FIG. 3. In the illustrated embodiment, the tool 200 includes two arm members 206. Alternatively, the tool 200 may include three arm members 206 or four arm members 206, based on system requirements. In one example, a size of the arm members 206 and a total number of arm members 206 may depend on a size of the piston 104 that needs to be removed. The arm members 206 define a first diameter "D1" when the second member 204 is at the first position. The first diameter "D1" is less than the diameter "d" (shown in FIG. 2) defined at the upper portion 118 of the piston bowl 116 so that the tool 200 may be received within the piston bowl 116. Further, the arm members 206 define a second diameter "D2" (shown in FIG. 6) when the second member 204 is at the second position. The second diameter "D2" is greater than the diameter "d" defined at the upper portion 118 of the piston bowl 116 so that the tool contacts and locks with an inner surface 122 of the piston 104.

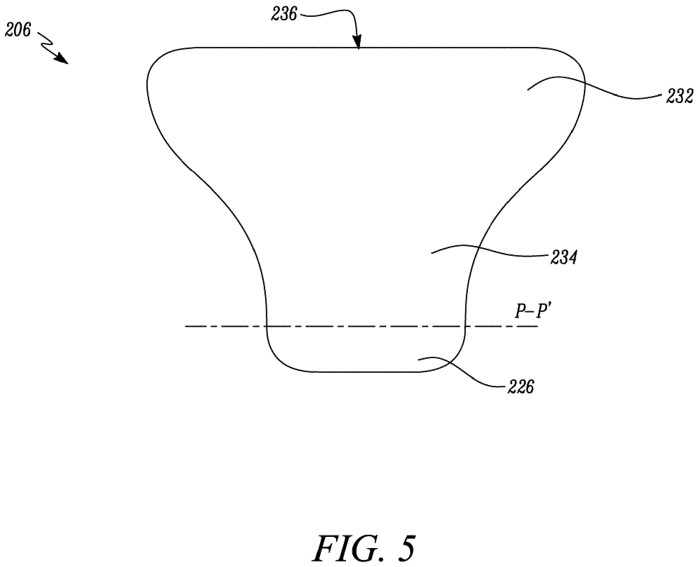

In one example, a cross-sectional area of the arm members 206 are lobe shaped (see FIGS. 2 and 6). Alternatively, the cross-sectional area of the arm members 206 may vary, without any limitations. The arm members 206 include a first portion 232, the second portion 226, and a third portion 234. As shown in FIG. 5, the first portion 232 of the arm members 206 is trapezoidal in shape. However, a shape of the first portion 232 may vary without any limitations. Further, the first portion 232 includes a curved surface 236.

As shown in FIG. 6, the first portion 232 contacts and locks with the inner surface 122 of the piston bowl 116 during removal of the piston 104. More particularly, the curved surface 236 (shown in FIG. 5) of the first portion 232 locks with the inner surface 122 of the piston bowl 116 when the piston 104 is being removed. Further, the second portion 226 of the arm member 206 is received within the corresponding groove 224 (shown in FIG. 4) defined in the first member 202 for pivotally coupling the arm members 206 with the first member 202. The second portions 226 of the respective arm member 206 define a pivot axis P-P' (shown in FIG. 5). The arm members 206 pivot about their respective pivot axis P-P' in order to lock the first portion 232 with the inner surface 122 of the piston bowl 116.

According to the invention, the third portion 234 is embodied as an intermediate portion that connects the first portion 232 with the second portion 226. In an assembled condition of the tool 200, the third portion 234 is received within an opening 238 defined in the second member 204. The third portion 234 is movably received within the opening 238. More particularly, a shape and a size of the opening 238 are decided such that the third portion 234 can move within the opening 238 when the second member 204 moves between the first and second positions.

The second member 204 that is movable between the first position and the second position will now be explained. It may be contemplated that the tool 200 is in a non-operative state when the second member 204 is in the first position. More particularly, the second member 204 is in the first position when the tool 200 is being inserted and positioned within the piston bowl 116. Further, the tool 200 is in an operative state when the second member 204 is in the second position.

The second member 204 includes the projection 214 that is provided on the interior surface 240 of the second member 204. As mentioned above, the projection 214 slides within the slot 210 defined on the first member 202 to allow movement of the second member 204 between the first and second positions. The second member 204 is assembled with the first member 202 by positioning the projection 214 in the passage 216 and sliding the projection 214 therein such that the projection 214 is received within the first region 220 of the slot 210. A presence of the projection 214 in the first region 220 is indicative of the second member 204 being in the first position. In a default position of the tool 200, the projection 214 is received at a top portion 242 (see FIG. 4) defined in the first region 220 of the slot 210.

Further, during the removal of the piston 104 from the cylinder 102, the second member 204 is axially displaced such that the projection 214 slides from the top portion 242 towards a lower portion 244 (see FIG. 4) defined in the first region 220. The second member 204 is then rotated so that the projection 214 is received and locked in the second region 222. A presence of the projection 214 in the second region 222 is indicative of the second member 204 being in the second position. The second member 204 disclosed herein also limits an axial movement of the arm members 206. The second member 204 limits the axial movement of the arm members 206 when the second member 204 is in the second position so that the arm members 206 do not pivot relative to the first member 202 when the piston 104 is being removed. More particularly, the second member 204 ensures that the first portion 232 of the arm members 206 maintains contact with the inner surface 122 of the piston bowl 116 when the piston 104 is being removed from the cylinder 102.

The tool 200 also includes a second handle 246. The second handle 246 is connected to the second member 204. The second handle 246 allows the personnel to move the second member 204 between the first position and the second position. More particularly, during the removal of the piston, the second handle 246 can be held by the personnel to move the second member 204 from the first position to the second position, after which the first handle 228 may be used to remove the piston 104 from the cylinder 102.

The second handle 246 may be threadably connected to the second member 204. More particularly, the second handle 246 may include threads that engage with corresponding threads provided on an exterior surface 248 of the second member 204 for threadably connecting the second handle 246 with the second member 204. The connection technique described above is exemplary in nature, and the second handle 246 may be connected to the second member 204 using any other technique, without any limitations. Further, a shape of the second handle 246 illustrated in the accompanying figures is exemplary in nature, and the shape of the second handle 246 may vary, without any limitations.

Further, the second handle 246 includes a through-hole (not shown) to allow passage of a portion of the first handle 228 therethrough so that the first handle 228 may be connected with the first member 202. Further, the first and second handles 228, 246 are designed and assembled such that the first and second handles 228, 246 do not interfere with each other during operation of the tool 200.

It should be noted that the tool 200 is made of a metal that can withstand a weight of the piston 104 when the piston 104 is being removed from the cylinder 102. In an example, the first member 202, the second member 204, the first handle 228, the second handle 246, and the second and third portions 226, 234 of the arm members 206 are made of a metal, without limiting the scope of the present disclosure. Further, the first portion 232 of the arm members 206 that contacts the inner surface 122 of the piston bowl 116 is made of a plastic. In one example, the first portion 232 may be made of a high strength plastic.

### Industrial Applicability

The present disclosure relates to the tool 200 and a method 700 to remove the piston 104 from the cylinder 102. The tool 200 is simple in design, manufacturing, and use. Further, the tool 200 described herein eliminates requirement of a groove in the piston bowl 116 that is typically provided for coupling piston removal tools with the piston 104. Elimination of the groove reduces space for unburned fuel which may in turn improve efficiency of the engine 100.

The tool 200 includes the arm members 206 that are pivotally coupled with the first member 202. During the removal of the piston 104, the arm members 206 lock with the inner surface 122 of the piston bowl 116. Thus, the tool 200 eliminates application of large bolt forces on the piston 104. Although the arm members 206 contact the piston 104, the arm members 206 do not apply excessive pressure on the inner surface 122 of the piston bowl 116, thus damages to the piston 104 is reduced. Additionally, the first portion 232 may be made of a plastic material so that the first portion 232 does not damage the piston 104 when the arm members 206 contact the piston 104. Further, the second member 204 of the tool 200 limits the axial movement of the arm members 206. The second member 204 ensures a positive locking between the piston 104 and the tool 200 so that piston 104 does not slip through the first and second members 202, 204 when the piston 104 is being removed.

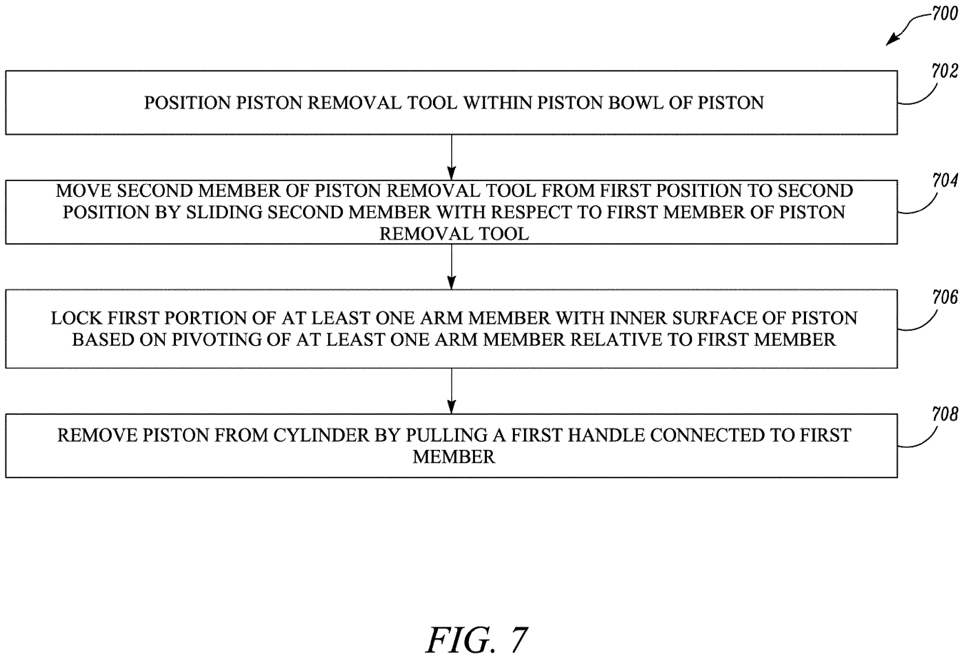

FIG. 7 is a flowchart for a method 700 of removing the piston 104 from the cylinder 102 of the engine 100. At step 702, the tool 200 is positioned within the piston bowl 116 of the piston 104. The tool 200 includes the first and second members 202, 204. Each of the first and second members 202, 204 are cylindrical in shape. The second member 204 is disposed around the first member 202. At step 704, the second member 204 is moved from the first position to the second position by sliding the second member 204 with respect to the first member 202. The second handle 246 is used to move the second member 204 between the first and second positions.

Further, in order to move the second member 204 between the first and second positions, the projection 214 provided on the interior surface 240 of the second member 204 is slidably received within the slot 210 defined on the outer surface 212 of the first member 202. The slot 210 defines the first and second regions 220, 222. The first region 220 extends parallel to the first axis A-A', such that the projection 214 of the second member 204 is received within the first region 220 when the second member 204 is at the first position. Further, the second region 222 extends perpendicular to the first axis A-A', such that the projection 214 of the second member 204 is received within the second region 222 when the second member 204 is at the second position.

The tool 200 includes multiple arm members 206, based on system requirements. The arm members 206 of the tool 200 pivot relative to the first member 202 based on the movement of the second member 204 from the first position to the second position. More particularly, the second portion 226 of the respective arm members 206 are received within the corresponding groove 224 defined on the outer surface 212 of the first member 202 for pivotally coupling the arm members 206 with the first member 202. Further, the grooves 224 extend perpendicular to the first axis A-A'.

The arm members 206 define the first diameter "D1" when the second member 204 is at the first position, such that the first diameter "D1" is less than the diameter "d" defined at the upper portion 118 of the piston bowl 116. Also, the arm members 206 define the second diameter "D2" when the second member 204 is at the second position, such that the second diameter "D2" is greater than the diameter "d" defined at the upper portion 118 of the piston bowl 116.

According to the invention, the third portion 234 of the arm members 206 are received within corresponding openings 238 of the second member 204 to allow pivoting of the arm members 206 relative to the first member 202. At step 706, the first portion 232 of the respective arm members 206 lock with the inner surface 122 of the piston 104 based on the pivoting of the arm members 206 relative to the first member 202. At step 708, the piston 104 is removed from the cylinder 102 by pulling the first handle 228 connected to the first member 202.

## Claims

1. A tool (200) for removing a piston (104) from a cylinder (102) of an engine (100), the tool (200) comprising:
a first member (202) having a slot (210) defined on an outer surface (212) thereof;
a first handle (228) connected to the first member (202);
at least one arm member (206) pivotally coupled with the first member (202), wherein the at least one arm member (206) includes a first portion (232) that contacts an inner surface (122) of the piston (104) when the piston (104) is being removed from the cylinder (102);
a second member (204) disposed around the first member (202) and movable between a first position and a second position, wherein the second member (204) is adapted to limit an axial movement of the at least one arm member (206) **characterised in that** the at least one arm member (206) includes a third portion (234) that is received within an opening (238) defined in the second member (204); and
a second handle (246) connected to the second member (204) to move the second member (204) between the first position and the second position.

2. The tool (200) of claim 1, wherein each of the first member (202) and the second member (204) are cylindrical in shape.

3. The tool (200) of claim 1, wherein the first member (202) includes at least one groove (224) defined on the outer surface (212) thereof, the at least one groove (224) receives a second portion (226) of the at least one arm member (206) for pivotally coupling the at least one arm member (206) with the first member (202).

4. The tool (200) of claim 3, wherein the at least one groove (224) extends perpendicular to a first axis (A-A') defined by the first member (202).

5. The tool (200) of claim 1, wherein the second member (204) includes a projection (214) provided on an interior surface (240) thereof, such that the slot (210) of the first member (202) slidably receives the projection (214).

6. The tool (200) of claim 5, wherein the slot (210) further defines:
a first region (220) extending parallel to a first axis (A-A') defined by the first member (202), wherein the projection (214) of the second member (204) is received within the first region (220) when the second member (204) is at the first position; and
a second region (222) extending perpendicular to the first axis (A-A'), wherein the projection (214) of the second member (204) is received within the second region (222) when the second member (204) is at the second position.

7. The tool (200) of claim 1, wherein the at least one arm member (206) includes a plurality of arm members (206).

8. The tool (200) of claim 7, wherein the plurality of arm members (206) define a first diameter (D1) when the second member (204) is at the first position, such that the first diameter (D1) is lesser than a diameter (d) defined at an upper portion (118) of a piston bowl (116).

9. The tool (200) of claim 7, wherein the plurality of arm members (206) define a second diameter (D2) when the second member (204) is at the second position, such that the second diameter (D2) is greater than a diameter (d) defined at an upper portion (118) of a piston bowl (116).

10. A method (700) for removing a piston (104) from a cylinder (102) of an engine (100), the method (700) comprising:
positioning a piston removal tool (200) within a piston bowl (116) of the piston (104);
moving a second member (204) of the piston removal tool (200) from a first position to a second position by sliding the second member (204) with respect to a first member (202) of the piston removal tool (200), the second member (204) being disposed around the first member (202), wherein at least one arm member (206) of the piston removal tool (200) pivots relative to the first member (202) based on the movement of the second member (204) from the first position to the second position, **characterised in that** it comprises:
receiving a third portion (234) of the at least one arm member (206) within an opening (238) of the second member (204);
locking a first portion (232) of the at least one arm member (206) with an inner surface (122) of the piston (104) based on the pivoting of the at least one arm member (206) relative to the first member (202); and
removing the piston (104) from the cylinder (102) by pulling a first handle (228) connected to the first member (202).

11. The method (700) of claim 10, wherein each of the first member (202) and the second member (204) are cylindrical in shape.

12. The method (700) of claim 10, further comprising receiving a second portion (226) of the at least one arm member (206) within at least one groove (224) defined on an outer surface (212) of the first member (202) for pivotally coupling the at least one arm member (206) with the first member (202).

13. The method (700) of claim 12, wherein the at least one groove (224) extends perpendicular to a first axis (A-A') defined by the first member (202).

14. The method (700) of claim 10, further comprising slidably receiving a projection (214) provided on an interior surface (240) of the second member (204) within a slot (210) defined on an outer surface (212) of the first member (202) for moving the second member (204) between the first and second positions, wherein a second handle (246) is used to move the second member (204) between the first and second positions.

15. The method (700) of claim 14, wherein the slot (210) further defines:
a first region (220) extending parallel to a first axis (A-A') defined by the first member (202), wherein the projection (214) of the second member (204) is received within the first region (220) when the second member (204) is at the first position; and
a second region (222) extending perpendicular to the first axis (A-A'), wherein the projection (214) of the second member (204) is received within the second region (222) when the second member (204) is at the second position.

16. The method (700) of claim 10, wherein the at least one arm member (206) includes a plurality of arm members (206).

17. The method (700) of claim 16, wherein the plurality of arm members (206) define a first diameter (D1) when the second member (204) is at the first position, such that the first diameter (D1) is less than a diameter (d) defined at an upper portion (118) of a piston bowl (116).

18. The method (700) of claim 16, wherein the plurality of arm members (206) define a second diameter (D2) when the second member (204) is at the second position, such that the second diameter (D2) is greater than a diameter (d) defined at an upper portion (118) of a piston bowl (116).

## Patentansprüche

1. Werkzeug (200) zum Ausbauen eines Kolbens (104) aus einem Zylinder (102) eines Motors (100), wobei das Werkzeug (200) Folgendes umfasst:
ein erstes Element (202) mit einem Schlitz (210), der auf einer Außenfläche (212) davon definiert ist;
einen ersten Griff (228), der mit dem ersten Element (202) verbunden ist;
mindestens ein Armelement (206), das schwenkbar mit dem ersten Element (202) gekoppelt ist, wobei das mindestens eine Armelement (206) einen ersten Abschnitt (232) einschließt, der eine Innenfläche (122) des Kolbens (104) berührt, wenn der Kolben (104) aus dem Zylinder (102) ausgebaut wird;
ein zweites Element (204), das um das erste Element (202) herum angeordnet ist und zwischen einer ersten Position und einer zweiten Position beweglich ist, wobei das zweite Element (204) dazu ausgelegt ist, eine axiale Bewegung des mindestens einen Armelements (206) zu begrenzen, **dadurch gekennzeichnet, dass** das mindestens eine Armelement (206) einen dritten Abschnitt (234) einschließt, der in einer Öffnung (238) aufgenommen ist, die in dem zweiten Element (204) definiert ist; und
einen zweiten Griff (246), der mit dem zweiten Element (204) verbunden ist, um das zweite Element (204) zwischen der ersten Position und der zweiten Position zu bewegen.

2. Werkzeug (200) nach Anspruch 1, wobei das erste Element (202) und das zweite Element (204) jeweils eine zylindrische Form aufweisen.

3. Werkzeug (200) nach Anspruch 1, wobei das erste Element (202) mindestens eine Nut (224) einschließt, die auf der Außenfläche (212) davon definiert ist, wobei die mindestens eine Nut (224) einen zweiten Abschnitt (226) des mindestens einen Armelements (206) aufnimmt, um das mindestens eine Armelement (206) schwenkbar mit dem ersten Element (202) zu koppeln.

4. Werkzeug (200) nach Anspruch 3, wobei sich die mindestens eine Nut (224) senkrecht zu einer ersten Achse (A-A') erstreckt, die durch das erste Element (202) definiert ist.

5. Werkzeug (200) nach Anspruch 1, wobei das zweite Element (204) einen Vorsprung (214) einschließt, der an einer Innenfläche (240) davon vorgesehen ist, so dass der Schlitz (210) des ersten Elements (202) den Vorsprung (214) verschiebbar aufnimmt.

6. Werkzeug (200) nach Anspruch 5, wobei der Schlitz (210) ferner Folgendes definiert:
einen ersten Bereich (220), der sich parallel zu einer ersten Achse (A-A') erstreckt, die durch das erste Element (202) definiert ist, wobei der Vorsprung (214) des zweiten Elements (204) in dem ersten Bereich (220) aufgenommen ist, wenn sich das zweite Element (204) an der ersten Position befindet; und
einen zweiten Bereich (222), der sich senkrecht zur ersten Achse (A-A') erstreckt, wobei der Vorsprung (214) des zweiten Elements (204) in dem zweiten Bereich (222) aufgenommen ist, wenn sich das zweite Element (204) an der zweiten Position befindet.

7. Werkzeug (200) nach Anspruch 1, wobei das mindestens eine Armelement (206) eine Vielzahl von Armelementen (206) einschließt.

8. Werkzeug (200) nach Anspruch 7, wobei die Vielzahl von Armelementen (206) einen ersten Durchmesser (D1) definieren, wenn sich das zweite Element (204) an der ersten Position befindet, so dass der erste Durchmesser (D1) kleiner als ein Durchmesser (d) ist, der an einem oberen Abschnitt (118) einer Kolbenmulde (116) definiert ist.

9. Werkzeug (200) nach Anspruch 7, wobei die Vielzahl von Armelementen (206) einen zweiten Durchmesser (D2) definieren, wenn sich das zweite Element (204) an der zweiten Position befindet, so dass der zweite Durchmesser (D2) größer als ein Durchmesser (d) ist, der an einem oberen Abschnitt (118) einer Kolbenmulde (116) definiert ist.

10. Verfahren (700) zum Ausbauen eines Kolbens (104) aus einem Zylinder (102) eines Motors (100), wobei das Verfahren (700) Folgendes umfasst:
Positionieren eines Kolbenausbauwerkzeugs (200) in einer Kolbenmulde (116) des Kolbens (104);
Bewegen eines zweiten Elements (204) des Kolbenausbauwerkzeugs (200) aus einer ersten Position in eine zweite Position durch Verschieben des zweiten Elements (204) in Bezug auf ein erstes Element (202) des Kolbenausbauwerkzeugs (200), wobei das zweite Element (204) um das erste Element (202) herum angeordnet ist, wobei mindestens ein Armelement (206) des Kolbenausbauwerkzeugs (200) relativ zu dem ersten Element (202) basierend auf der Bewegung des zweiten Elements (204) aus der ersten Position in die zweite Position schwenkt, **dadurch gekennzeichnet, dass** es Folgendes umfasst:
Aufnehmen eines dritten Abschnitts (234) des mindestens einen Armelements (206) in einer Öffnung (238) des zweiten Elements (204);
Feststellen eines ersten Abschnitts (232) des mindestens einen Armelements (206) mit einer Innenfläche (122) des Kolbens (104) basierend auf dem Schwenken des mindestens einen Armelements (206) relativ zu dem ersten Element (202) und
Ausbauen des Kolbens (104) aus dem Zylinder (102) durch Ziehen an einem ersten Griff (228), der mit dem ersten Element (202) verbunden ist.

11. Verfahren (700) nach Anspruch 10, wobei das erste Element (202) und das zweite Element (204) jeweils eine zylindrische Form aufweisen.

12. Verfahren (700) nach Anspruch 10, ferner umfassend das Aufnehmen eines zweiten Abschnitts (226) des mindestens einen Armelements (206) in mindestens einer Nut (224), die auf einer Außenfläche (212) des ersten Elements (202) definiert ist, um das mindestens eine Armelement (206) schwenkbar mit dem ersten Element (202) zu koppeln.

13. Verfahren (700) nach Anspruch 12, wobei sich die mindestens eine Nut (224) senkrecht zu einer ersten Achse (A-A') erstreckt, die durch das erste Element (202) definiert ist.

14. Verfahren (700) nach Anspruch 10, ferner umfassend das verschiebbare Aufnehmen eines Vorsprungs (214), der auf einer Innenfläche (240) des zweiten Elements (204) vorgesehen ist, in einem Schlitz (210), der auf einer Außenfläche (212) des ersten Elements (202) definiert ist, um das zweite Element (204) zwischen der ersten und der zweiten Position zu bewegen, wobei ein zweiter Griff (246) verwendet wird, um das zweite Element (204) zwischen der ersten und der zweiten Position zu bewegen.

15. Verfahren (700) nach Anspruch 14, wobei der Schlitz (210) ferner Folgendes definiert:
einen ersten Bereich (220), der sich parallel zu einer ersten Achse (A-A') erstreckt, die durch das erste Element (202) definiert ist, wobei der Vorsprung (214) des zweiten Elements (204) in dem ersten Bereich (220) aufgenommen ist, wenn sich das zweite Element (204) an der ersten Position befindet; und
einen zweiten Bereich (222), der sich senkrecht zur ersten Achse (A-A') erstreckt, wobei der Vorsprung (214) des zweiten Elements (204) in dem zweiten Bereich (222) aufgenommen ist, wenn sich das zweite Element (204) an der zweiten Position befindet.

16. Verfahren (700) nach Anspruch 10, wobei das mindestens eine Armelement (206) eine Vielzahl von Armelementen (206) einschließt.

17. Verfahren (700) nach Anspruch 16, wobei die Vielzahl von Armelementen (206) einen ersten Durchmesser (D1) definieren, wenn sich das zweite Element (204) an der ersten Position befindet, so dass der erste Durchmesser (D1) kleiner als ein Durchmesser (d) ist, der an einem oberen Abschnitt (118) einer Kolbenmulde (116) definiert ist.

18. Verfahren (700) nach Anspruch 16, wobei die Vielzahl von Armelementen (206) einen zweiten Durchmesser (D2) definieren, wenn sich das zweite Element (204) an der zweiten Position befindet, so dass der zweite Durchmesser (D2) größer als ein Durchmesser (d) ist, der an einem oberen Abschnitt (118) einer Kolbenmulde (116) definiert ist.

## Revendications

1. Outil (200) pour retirer un piston (104) d'un cylindre (102) d'un moteur (100), l'outil (200) comprenant :
un premier élément (202) ayant une encoche (210) définie sur une surface externe (212) de celui-ci ;
une première poignée (228) reliée au premier élément (202) ;
au moins un élément de bras (206) couplé de façon pivotante au premier élément (202), dans lequel l'au moins un élément de bras (206) inclut une première partie (232) qui vient en contact avec une surface interne (122) du piston (104) lorsque le piston (104) est en cours de retrait hors du cylindre (102) ;
un deuxième élément (204) disposé autour du premier élément (202) et mobile entre une première position et une deuxième position, dans lequel le deuxième élément (204) est conçu pour limiter un mouvement axial de l'au moins un élément de bras (206) **caractérisé en ce que** l'au moins un élément de bras (206) inclut une troisième partie (234) qui est reçue au sein d'une ouverture (238) définie dans le deuxième élément (204) ; et
une deuxième poignée (246) reliée au deuxième élément (204) pour déplacer le deuxième élément (204) entre la première position et la deuxième position.

2. Outil (200) selon la revendication 1, dans lequel chacun du premier élément (202) et du deuxième élément (204) est de forme cylindrique.

3. Outil (200) selon la revendication 1, dans lequel le premier élément (202) inclut au moins une rainure (224) définie sur la surface externe (212) de celui-ci, l'au moins une rainure (224) reçoit une deuxième partie (226) de l'au moins un élément de bras (206) pour un couplage pivotant de l'au moins un élément de bras (206) avec le premier élément (202).

4. Outil (200) selon la revendication 3, dans lequel l'au moins une rainure (224) s'étend perpendiculaire à un premier axe (A-A') défini par le premier élément (202).

5. Outil (200) selon la revendication 1, dans lequel le deuxième élément (204) inclut une saillie (214) fournie sur une surface intérieure (240) de celui-ci, de telle sorte que l'encoche (210) du premier élément (202) reçoit de manière coulissante la saillie (214).

6. Outil (200) selon la revendication 5, dans lequel l'encoche (210) définit en outre :
une première région (220) s'étendant parallèle à un premier axe (A-A') défini par le premier élément (202), dans lequel la saillie (214) du deuxième élément (204) est reçue au sein de la première région (220) lorsque le deuxième élément (204) est à la première position ; et
une deuxième région (222) s'étendant perpendiculaire au premier axe (A- A'), dans lequel la saillie (214) du deuxième élément (204) est reçue au sein de la deuxième région (222) lorsque le deuxième élément (204) est à la deuxième position.

7. Outil (200) selon la revendication 1, dans lequel l'au moins un élément de bras (206) inclut une pluralité d'éléments de bras (206).

8. Outil (200) selon la revendication 7, dans lequel la pluralité d'éléments de bras (206) définissent un premier diamètre (D1) lorsque le deuxième élément (204) est à la première position, de telle sorte que le premier diamètre (D1) est inférieur à un diamètre (d) défini au niveau d'une partie supérieure (118) d'un évidement de piston (116).

9. Outil (200) selon la revendication 7, dans lequel la pluralité d'éléments de bras (206) définissent un deuxième diamètre (D2) lorsque le deuxième élément (204) est à la deuxième position, de telle sorte que le deuxième diamètre (D2) est supérieur à un diamètre (d) défini au niveau d'une partie supérieure (118) d'un évidement de piston (116).

10. Procédé (700) pour retirer un piston (104) d'un cylindre (102) d'un moteur (100), le procédé (700) comprenant :
le positionnement d'un outil de retrait de piston (200) au sein d'un évidement de piston (116) du piston (104) ;
le déplacement d'un deuxième élément (204) de l'outil de retrait de piston (200) d'une première position à une deuxième position par coulissement du deuxième élément (204) par rapport à un premier élément (202) de l'outil de retrait de piston (200), le deuxième élément (204) étant disposé autour du premier élément (202), dans lequel au moins un élément de bras (206) de l'outil de retrait de piston (200) pivote par rapport au premier élément (202) sur la base du mouvement du deuxième élément (204) de la première position à la deuxième position, **caractérisé en ce qu'il** comprend :
la réception d'une troisième partie (234) de l'au moins un élément de bras (206) au sein d'une ouverture (238) du deuxième élément (204) ;
le verrouillage d'une première partie (232) de l'au moins un élément de bras (206) avec une surface interne (122) du piston (104) sur la base du pivotement de l'au moins un élément de bras (206) par rapport au premier élément (202) ; et
le retrait du piston (104) du cylindre (102) en tirant une première poignée (228) reliée au premier élément (202).

11. Procédé (700) selon la revendication 10, dans lequel chacun du premier élément (202) et du deuxième élément (204) est de forme cylindrique.

12. Procédé (700) selon la revendication 10, comprenant en outre la réception d'une deuxième partie (226) de l'au moins un élément de bras (206) au sein d'au moins une rainure (224) définie sur une surface externe (212) du premier élément (202) pour un couplage pivotant de l'au moins un élément de bras (206) avec le premier élément (202).

13. Procédé (700) selon la revendication 12, dans lequel l'au moins une rainure (224) s'étend perpendiculaire à un premier axe (A-A') défini par le premier élément (202).

14. Procédé (700) selon la revendication 10, comprenant en outre la réception coulissante d'une saillie (214) fournie sur une surface intérieure (240) du deuxième élément (204) au sein d'une encoche (210) définie sur une surface externe (212) du premier élément (202) pour déplacer le deuxième élément (204) entre les première et deuxième positions, dans lequel une deuxième poignée (246) est utilisée pour déplacer le deuxième élément (204) entre les première et deuxième positions.

15. Procédé (700) selon la revendication 14, dans lequel l'encoche (210) définit en outre :
une première région (220) s'étendant parallèle à un premier axe (A-A') défini par le premier élément (202), dans lequel la saillie (214) du deuxième élément (204) est reçue au sein de la première région (220) lorsque le deuxième élément (204) est à la première position ; et
une deuxième région (222) s'étendant perpendiculaire au premier axe (A- A'), dans lequel la saillie (214) du deuxième élément (204) est reçue au sein de la deuxième région (222) lorsque le deuxième élément (204) est à la deuxième position.

16. Procédé (700) selon la revendication 10, dans lequel l'au moins un élément de bras (206) inclut une pluralité d'éléments de bras (206).

17. Procédé (700) selon la revendication 16, dans lequel la pluralité d'éléments de bras (206) définissent un premier diamètre (D1) lorsque le deuxième élément (204) est à la première position, de telle sorte que le premier diamètre (D1) est inférieur à un diamètre (d) défini au niveau d'une partie supérieure (118) d'un évidement de piston (116).

18. Procédé (700) selon la revendication 16, dans lequel la pluralité d'éléments de bras (206) définissent un deuxième diamètre (D2) lorsque le deuxième élément (204) est à la deuxième position, de telle sorte que le deuxième diamètre (D2) est supérieur à un diamètre (d) défini au niveau d'une partie supérieure (118) d'un évidement de piston (116).
